# EUROPEAN PATENT SPECIFICATION

(11) **EP 1 576 228 B1**
(45) Date of publication and mention of the grant of the patent: **10.08.2011**
(21) Application number: 03810831.2
(22) Date of filing: 04.11.2003
(51) Int. Cl.: D06M 15/564, D06M 15/568, D06M 15/572, C08G 18/08, C08G 18/10

(54) **ARTICLES TREATED WITH AQUEOUS DISPERSIONS OF POLY(UREA/URETHANES)**
MIT WÄSSRIGEN DISPERSIONEN VON POLYHARNSTOFFURETHANEN BEHANDELTE GEGENSTÄNDE
ARTICLES TRAITES AVEC DES DISPERSIONS AQUEUSES DE POLY(UREE/URETHANES)

(30) Priority: 04.11.2002 US 423480 P
(43) Date of publication of application: 21.09.2005
(73) Proprietor: INVISTA Technologies S.à.r.l., 8001 Zürich (CH)
(72) Inventor: KIM, Young, H., Hockessin, DE 19707 (US); O'NEILL, Michael, Middletown, DE 19709 (US); CHEN, Jiazhong, Boothwyn, PA 19061 (US); YARBOROUGH, Portia, D., Midlothian, VA 23112 (US)
(74) Representative: Cockerton, Bruce Roger
(86) International application number: PCT/US2003/035195
(87) International publication number: WO 2004/042135

(56) References cited:
- EP-A- 0 282 771
- DE-A- 19 708 451
- US-A- 3 419 533
- US-A- 4 108 814
- US-A- 4 742 095

## Description

### Field of the Invention

This invention involves a urethane polymer that does not include the residue of a chain extender, curing agent or crosslinking agent, and an aqueous dispersion made therefrom. Articles of manufacture are treated with aqueous dispersions of such poly(urea/urethanes) to provide cut and abrasion resistance, decreased air permeability, and improved moisture vapor transport.

### Background of the Invention

The production of elastomeric materials is known in the art from sources such as Kirk-Othmer Encyclopedia of Chemical Technology (4th edition, Volume 10, Pages 624-638, John Wiley & Sons, Inc., New York, 1993). Many elastomeric materials contain a urethane bond that is prepared by reacting a hydroxy-terminated polyether or polyester with a ployisocyanate at a molar ratio of about 1:1.4 to 1:2.5 (polyol to polyisocyanate). This is typically followed by reaction of the resulting isocyanate-terminated prepolymer with a polyamine to produce a high molecular weight urea/urethane polymer. Small amounts of monofunctional amines may also be included to control polymer molecular weight. Mechanical properties in the final polymer may be modified by the choice of the polyether or polyester glycol, the diisocyanate, the polyamine, and the monoamine used; and they can also be modified by the choice of the polyol-diisocyanate molar ratio.

Long-chain elastomeric urethane polymer molecules are substantially linear block copolymers containing relatively long blocks in which molecular interactions are weak, interconnected by shorter blocks in which interactions are strong. The weakly interacting blocks, commonly referred to as soft segments, typically derive from the polyether or polyester glycol component whereas the blocks having strong interactions derive from polyisocyanate and chain extender reactions, and are referred to as hard segments. The chain extension reaction is usually a coupling reaction between an isocyanate terminus and an amino group of a polyamine, resulting in a urea linkage. Thus, the resulting polymer of the combined hard- and soft-segments typically results in a poly(urea/urethane).

Polymers as described above have been used to prepare aqueous urethane dispersions. A urethane dispersion my be prepared, for example, by chain extending the reaction product of an organic diisocyanate or polyisocyanate and an organic compound having two or more active hydrogen atoms (in either a hydroxy or amino terminus), often using a small amount of an organic solvent. As the diisocyanate is used in stoichiometric excess, the reaction product, which may be a urea/urethane prepolymer is isocyanate terminated. Examples of prepolymer preparations such as these are described in U.S. Patents Nos. 3,178,310, 3,919,173, 4,442,259, 4,444,976, and 4,742,095, among others.

Urethane dispersions are reported as being useful for preparing such diverse materials as coatings and films. Coatings are frequently utilized in fabricating protective equipment for workers. For example, workers exposed to cut hazards, such as sharp objects, blades, and glass, require hand protection with a combination of performance properties. In addition to cut resistance, penetration resistance of dirt and oil, wear resistance, enhanced grip, and comfort may be important properties depending on the work environment.

Coating technology used in unsupported glove structures provides excellent chemical and oil resistance and improved grip and handling. The seamless knit glove structure is ideal for providing comfort and dexterity. Coating seamless knit gloves with a polymer solution to yield a flat dipped or fully dipped system offers the wearer the comfort and feel of a knit glove with the durability of an unsupported dipped glove.

The drawback of combining knit shell with coating technology is the lack of retention of certain properties such as cut resistance. Cut resistance is determined by the ability of the yam to slip against companion yarns and the cutting instrument. During the dipping process, the coating material penetrates through the knit shell encapsulating the yarns. The cut resistance of the glove is compromised since the yarns are immobile. It is generally accepted that coatings that fully penetrate the fabric and encapsulate the yarns show compromised cut protection performance.

For improved fabric softness, softeners like polysiloxane compounds are applied to the fabric. One desired property of the fabric is water resistance, but it must also retain moisture permeating properties. In order to allow the water vapor to pass through the fabric, the fabric can be coated on one or two sides with a porous polyurethane layer (JP 11-061,648). Such microporous films can be derived from a polyurethane containing inorganic whiskers (JP 09-158,051). For water protection, the fabric can be treated with a porous polyurethane in combination with fluorinated polymers. (JP 56-169,865).

As an example, commercially available high molecular weight polyethylene yam is knit into a shell that is dipped in a polyurethane coating. The coating shows a 20-25% difference in the cut protection performance between the coated and uncoated areas of the glove.

| Description | Basis weight, oz/yd² | Cut protection performance, grams |
|---|---|---|
| Polyurethane coated HMWPE | 12.07 | 462 |
| Uncoated HMWPE | 11.15 | 566 |

It would be desirable to provide a coated glove or other article of manufacture that offers the benefits of coated materials without compromising the cut resistance, and a need thus remains for a poly(urea/urethane) dispersion that can be used to prepare a coating for such purpose.

Polyurethane dispersions of various kinds are currently known. Despite the widespread use of aromatic polyisocyanates such as toluene diisocyanate (TDI), methylene diphenyldiisocyanate (MDI) and polymethylene polyphenylisocyanate (PMDI), an aliphatic polyisocyanate has sometimes been preferred for use in preparing an aqueous urethane dispersion. The aliphatic isocyanates, such as those disclosed in US Pat. No. 5,494,960, are thought to have much higher stability toward hydrolysis while the prepolymer is dispersed in water. It is generally believed that, in such situation, a chain-extending reaction between an isocyanate and a polyamine takes place in a more controlled and predictable manner.

The reaction of a diisocyanate with a polyamine in water is, however, thought to be diffusion controlled, and it thus cannot be assured that all added polyamine is consumed during the reaction. Any unreacted polyamine remains with the polymer when it is fabricated from the dispersion into a final product. When that product is intended for use in which it contacts human skin, the presence of such unreacted polyamines [such as ethylene diamine and other diamines as described in B.K. Kim, Colloid. Polym. Sci., 274:599-611, 1996 ("Kim", which is incorporated in its entirety as a part hereof for all purposes)] may cause skin irritation or sensitivity for the user of the product. The presence of unreacted polyamines in a urethane dispersion can also cause an unpleasant odor in any product that is fabricated from the dispersion.

A need thus also remains for urethane polymers that can be readily formed into a dispersion, and that, when used as a coating, have a reduced possibility of displaying characteristics that a user would find harmful or objectionable. Applicant has found that reducing or eliminating the content of unreacted polyamine in a urethane polymer results in the preparation of a urethane polymer that, in the form of a dispersion, may be applied as a coating and yet has no tendency to cause skin irritation or to exude an unpleasant odor. Applicant has consequently proposed to reduce, and preferably eliminate, the content of unreacted polyamine in such a urethane polymer by preparing the polymer without the use of a polyamine chain extender.

### Summary of the invention

One embodiment of this invention is an article of manufacture that is coated with a urea/urethane polymer that includes (a) repeating units derived from a hydroxy-terminated copolymer prepared from tetrahydrofuran and one or both of an alkylene oxide and a cyclic acetal, and (b) repeating units derived from a polyisocyanate selected from the group consisting of toluene diisocyanate, methylene diphenyldiisocyanate and polymethylene polyphenyl isocyanate.
wherein the atrea/urethane polymer polymer contains less than about 2 mole percent of urea units described by the formula -R - N(R²) - C(O) - N(R²)-R¹-;
wherein R is an aromatic hydrocarbon radical, R¹ is an aliphatic hydrocarbon radical, and R² is H or an amide group that is described by the formula - C(O) - N(R²) - R -; and
wherein the tetrahydrofuran is described by the formula 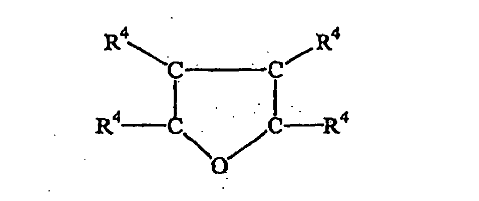 in which any one of the R⁴s may be a C₁ to C₄ alkyl radical with the remaining R⁴s being hydrogen, wherein the article is a fabric or a textile and wherein the fabric or textile comprises a paraaramid polymer.

These articles may, for example, be treated with a coating that is applied by dipping, and may be made of woven or knit fabric or textile construction. Examples of apparel articles include gloves, hats, aprons, gauntlets, shirts, and pants. Examples of industrial articles include tents, geotextiles and the like.

### Brief Description of the Drawing

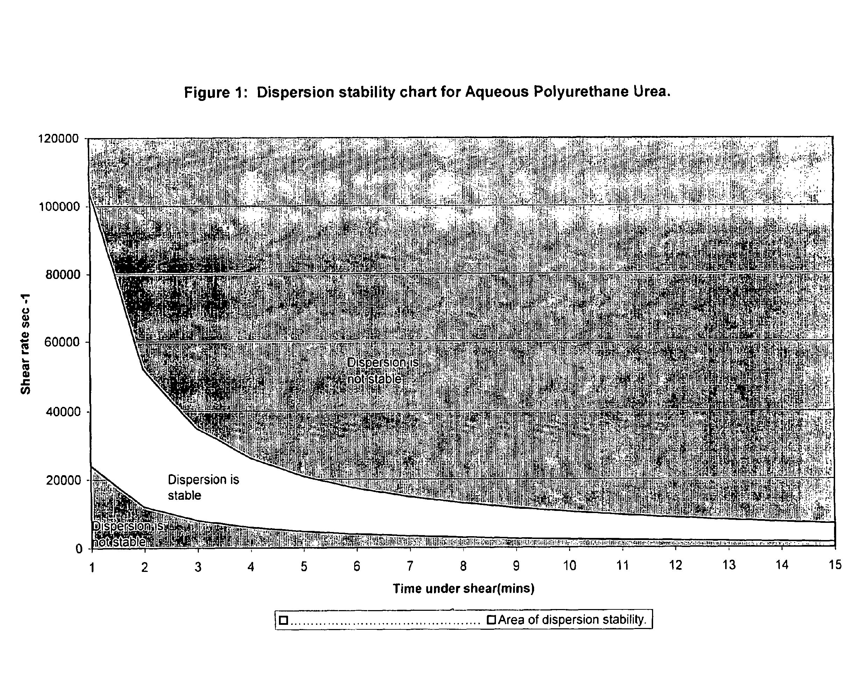

Figure 1 is a plot of shear rate (in sec⁻¹) versus shear time (in minutes) for the preparation of an aqueous poly(urea/urethane) dispersion.

### Detailed Description of the invention

This invention discloses the preparation of a stable aqueous poly(urea/urethane) dispersion, which are included in the materials sometimes referred to herein as "urethane" polymers or dispersions. The dispersion is based on the use of a polyether homo- and/or copolymer, or a polyester, as a glycol, and an aromatic polyisocyanate, but does not require the use of a typical chain extending agent such as a polyamine, a curing agent or a crosslinking agent. In the dispersion process, a stable colloidal particle of elastomeric polyurethane is generated, which has a wide utility.

Typically, for the generation of an aqueous colloid of polyurethane, an aliphatic polyisocyanate is preferred. (See, generally, Kim.) These aliphatic polyisocyanates are reacted with various glycols to form oligomeric prepolymers, which are then dispersed into water that contains an equivalent amount of diamine. The amount of diamine is added by equivalence to percent NCO in the prepolymer, as determined by n-butylamine titration and back calculation. The aliphatic polyisocyanates have relatively high stability in water so that the diamine reacts with the isocyanate to chain extend the prepolymer through urea linkages.

It has been found, however, that in the urethane polymers and urethane dispersions of this invention, isocyanate groups undergo hydrolysis to form
-NH₂ groups. These -NH₂ groups subsequently react with other isocyanate groups to form urea bonds in an amount that forms high polymers (e.g., molecular weights that are adequate for free standing film formation - typically above 100,000 and preferably above 200,000), and this occurs without need for the addition of common polyamines, such as ethylene diamine and other diamines as described in Kim. This is important because the reaction of an isocyanate group with polyamine in water is diffusion controlled, and it cannot be assured that all added polyamine is consumed during the reaction. Any unreacted polyamine, which remains in the material during further fabrication, can cause skin irritation or sensitivity in the eventual use of certain products.

Omitting a polyamine chain extender from the reaction to form the poly(urea/urethane) enables the production of a polymer or contains less than about 2 mole percent, preferably less than about 1 mole percent, and more preferably less than about 0.5 mole percent of urea units as described by the formula
-R-N(R²)-C(O)-N(R²)-R¹-; wherein R is an aromatic hydrocarbon radical, R¹ is an aliphatic hydrocarbon radical, and R² is H or an amide group that is described by the formula - C(O) - N(R²) - R -. In a further embodiment, the polymer is free of, substantially free of, the urea units as described above, and is substantially free of such urea units when the content of unreacted polyamine in the polymer is sufficiently low that the presence of such amount of polyamine does not cause any undesirable smell in the product, or any undesirable skin reaction for the user of a film product made therefrom.

It has also been found in the urethane polymers and dispersions of this invention that the polyisocyanate need not be limited to an aliphatic polyisocyanate, and that aromatic polyisocyanates are suitable for use herein.

The aromatic polyisocyanates used in the present invention are selected from the group consisting of toluene diisocyanate, methylene diphenyldiisocyanate and polymethylene polyphenylisocyanate.

It is preferred to use in the urea/urethane polymers and dispersions hereof a hydrophilic soft segment having a polarity that enhances formation of the dispersion. In one embodiment, such a soft segment may be formed from a hydroxy-terminated copolymer prepared from tetrahydrofuran and one or both of an alkylene oxide and a cyclic acetal. The alkylene oxides used to prepare such a copolymer may be those containing 2 or 3 carbon atoms in the alkylene oxide ring. The alkylene oxide can be unsubstituted or substituted with, for example, alkyl groups, aryl groups or halogen atoms. Illustrative of such alkylene oxides are ethylene oxide and 1,2-propylene oxide, with ethylene oxide (EO) being preferred. The cyclic acetals that can be used as comonomers are those represented by a structure such as the following 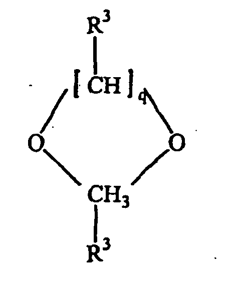 in which q is 2 to 4, and each R³ is independently hydrogen or methyl. The tetrahydrofurans that can be used as comonomers are those represented by a structure such as the following 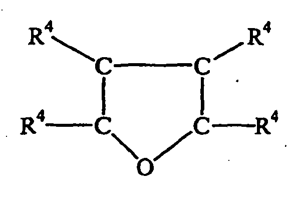 in which any one of the R⁴s may be a C₁ to C₄ alkyl radical with the remaining R⁴s being hydrogen. In the preferred tetrahydrofuran (THF), however, all R⁴s are hydrogen.

The portion of this copolymer derived from the alkylene oxide and/or cyclic acetal may be greater than about 20 percent by weight, and is preferably about 25 to about 60 percent by weight. This copolymer may have a molecular weight of about 1000 to about 3500, and preferably has a molecular weight of about 1500 to about 2500. These copolymers may be prepared by a process that employs a polymeric catalyst prepared from monomers such as trifluorovinyl sulfonic acid, linear or branched-chain vinyl monomers containing α-fluoro sulfonic acid group precursors, and perfluoroalkylvinly ethers α-fluoro sulfonic acid group precursors. The process may be run at temperatures ranging from ambient to 80°C, or at higher temperatures under a pressure of up to 5000 atmospheres. The reaction is preferably run in an inert atmosphere such as nitrogen. If the copolymer is ester end-capped as prepared, it may be converted to a copolyether glycol by alcoholysis. Suitable soft segment copolymers, and methods for their preparation, are further described in sources such as U.S. Pat. Nos. 4,127,513, 4,139,567, 4,153,786, 4,228,272 and 4,235,751; DE 86-3606479 and DE 83-3346136; J.M. Hammond et al, J. Polym. Sci., Part A, Vol. 9, page 295 (1971); and Hongzhi Zhang et al, J. Appl. Polym. Sci., Vol. 73, page 2303 (1999).

The urethane polymer may further comprise repeating units derived from an ionic compound or a potentially ionic compound. The ionic or potentially ionic groups are incorporated in an amount sufficient to provide an ionic group content of up to about 120 milliequivalents, preferably about 10 to 80 milliequivalents, more preferably about 10 to 60 milliequivalents, and most preferably about 10 to 30 milliequivalents per 100 g of poly(urealurethane).

Suitable compounds for incorporating these groups include (1) monoisocyanates or diisocyanates which contain ionic or potentially ionic groups, and (2) compounds which are monofunctional or difunctional in the isocyanate-polyaddition reaction and contain ionic or potentially ionic groups. The potentially ionic groups or their corresponding ionic groups may be cationic or anionic, although the anionic groups are preferred. Examples of anionic groups include -COO⁻ and -SO3⁻. Examples of cationic groups include

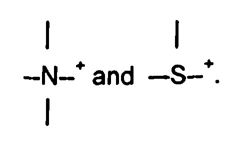

These ionic groups are formed by neutralizing the corresponding potentially ionic groups either prior to, during or after forming the isocyanate-terminated prepolymer. When the potentially ionic groups are neutralized prior to forming the isocyanate-terminated prepolymer, the ionic groups are incorporated directly. When neutralization is preformed subsequent to forming the prepolymer, potentially ionic groups are incorporated.

Suitable compounds for incorporating the previously discussed carboxylate, sulfonate and quaternary nitrogen groups are described in U.S. Pat. Nos. 3,479,310, 4,303,774 and 4,108,814. Suitable compounds for incorporating tertiary sulfonium groups are described in U.S. Pat. No. 3,419,533. The neutralizing agents for converting the potentially ionic groups to ionic groups are also described in those patents. Within the context of this invention, the term "neutralizing agents" is meant to embrace all types of agents which are useful for converting potentially ionic groups to ionic groups. Accordingly, this term also embraces quatemizing agents and alkylating agents.

The preferred sulfonate groups for incorporation into the isocyanate-terminated prepolymers are the diol sulfonates disclosed in U.S. Pat. No. 4,108,814. Suitable sulfonates also include those described as follows:
H₂N - CH₂ - CH₂ - NH - (CH₂)ᵣ - SO₃Na, where r = 2 or 3; and HO - CH₂ - CH₂ - C(SO₃Na)H - CH₂ - OH. The preferred carboxylate groups for incorporation into the isocyanate-terminated prepolymer are derived from hydroxy-carboxylic acids of the general formula (HO)ₓR⁷(COOH)_{y}, wherein R⁷ represents a straight or branched hydrocarbon radical containing 1 to 12 carbon atoms, and x and y each independently represents values from 1 to 3. Examples of these hydroxy-carboxylic acids include citric acid and tartaric acid.

The preferred acids are those of the above-mentioned formula wherein x = 2 and y = 1. These dihydroxy alkanoic acids are described in U.S. Pat. No. 3,412,054. The preferred group of dihydroxy alkanoic acids are the α,α-dimethylol alkanoic acids represented by the structural formula R⁹ - C - (CH₂OH)₂ - COOH, wherein R9 is hydrogen or an alkyl group containing 1 to 8 carbon atoms. The most preferred dihydroxy alkanoic acids is 2,2' dimethanolpropionic acid ("DMPA"). Suitable carboxylates also include
H₂N - (CH₂)₄ - C(CO₂H)H - NH₂ + base, and
H₂N - CH₂ - CH₂ - NH - CH₂ - CH₂ - CO₂Na.

In addition the foregoing, cationic centers such as tertiary amines with one alkyl and two alkylol groups may also be used as the ionic or potentially ionic group.

In order to convert the preferred potential anionic groups to anionic groups either before, during or after their incorporation into the prepolymers, either volatile or nonvolatile cations are used to form the counterions of the anionic groups. Volatile cations are those wherein at least about 90% of the basic organic compounds used to form the counterion of the anionic group volatilize under the conditions used to cure films formed from the poly(urea/urethane) dispersions, preferably at least about 90% of the basic organic compounds volatilize when films formed from the poly(urea/urethane) dispersions are cured under ambient conditions. Nonvolatile cations are those wherein at least about 90% of the cations do not volatilize under the conditions used to cure films formed from the poly(urea/urethane) dispersions, preferably at least about 90% of the cations do not volatilize when films formed from the polyurethane-urea dispersions are cured under ambient conditions. As the amount of counterions formed from volatile basic organic compounds increases, the resistance to water swell of coatings or films prepared from the aqueous polyurethane-urea dispersions is further improved; whereas, as the amount of counterions formed from nonvolatile cations increases, the hydrolytic stability of films or coatings prepared from the aqueous polyurethane-urea dispersions is further improved. Therefore, it is possible to control the properties of the finally produced coatings or films by simply controlling the ratio between the volatile and nonvolatile cations used to form the counterions of the anionic groups.

Suitable volatile basic organic compounds for neutralizing the potential anionic groups are the primary, secondary or tertiary amines. Of these the trialkyl-substituted tertiary amines are preferred. Examples of these amines are trimethyl amine, triethyl amine, triisopropyl amine, tributyl amine,
N,N-dimethyl-cyclohexyl amine, N,N- dimethylstearyl amine, N,N-dimethylaniline, N-methylmorpholine,
N- ethylmorpholine, N-methylpiperazine,
N-methylpyrrolidine, N-methylpiperidine,
N,N-dimethyl-ethanol amine, N,N-diethyl-ethanol amine, triethanolamine, N-methyldiethanol amine, dimethylaminopropanol, 2-methoxyethyldimethyl amine, N-hydroxyethylpiperazine,
2-(2- dimethylaminoethoxy)-ethanol and
5-diethylamino-2-pentanone. The most preferred tertiary amines are those which do not contain active hydrogen(s) as determined by the Zerewitinoff test since they are capable of reacting with the isocyanate groups of the prepolymers which can cause gelation, the formation of insoluble particles or chain termination.

When triethyl amine is used as a base, using less than one equivalent of amine to the acid, to minimize any potential odor, is recommended. The dispersing water generally contains less than one equivalent of base to neutralize the acid, wherein the pH of the 1 mole aqueous solution does not exceed 10.

Suitable nonvolatile cations also include monovalent metals, preferably alkali metals, more preferably lithium, sodium and potassium and most preferably sodium. These cations may be used in the form of inorganic or organic salts, preferably salts wherein the anions do not remain in the dispersions such as hydrides, hydroxides, carbonates or bicarbonates. When an acid-containing diol, for example, is used as the ionic group, a relatively mild inorganic base such as NaHCO₃, Na(CO₃)₂, NaAc (where Ac represents acetate), NaH₂PO₄ and the like will assist in improving the dispersion. These inorganic bases are relatively low in odor, and also tend not to be skin irritants.

When the potential cationic or anionic groups of the prepolymer are neutralized, they provide hydrophilicity to the prepolymer and better enable it to be stably dispersed in water. The neutralization steps may be conducted (1) prior to prepolymer formation by treating the component containing the potentially ionic group(s), or (2) after prepolymer formation, but prior to dispersing the prepolymer. The reaction between the neutralizing agent and the potential anionic groups may be conducted between about 20°C and about 150°C, but is normally conducted at temperatures below about 100°C, preferably between about 30°C and about 80°C, and most preferably between about 50°C and about 70°C, with agitation of the reaction mixture. The ionic or potentially ionic group may be used in amount of about 3 to about 5 percent by weight.

The isocyanate-terminated prepolymers of the present invention are prepared by reacting the polyisocyanate component with the polyol component, and, in the embodiments where used, the component containing at least one ionic group or at least one potentially ionic group. The potentially ionic groups are groups which may be converted to ionic groups by treatment with neutralizing agents. The ratio of isocyanate groups to isocyanate-reactive groups is maintained between about 1.1 to 3, preferably about 1.2 to 2 and most preferably about 1.3 to 1.5 on an equivalent basis. The above components may be reacted simultaneously or sequentially to produce the isocyanate-terminated prepolymer. Simultaneous reaction will lead to the production of random copolymers, whereas a sequential-type reaction will lead to the production of block copolymers. The order of addition of the compounds containing isocyanate-reactive hydrogen(s) in the sequential-type reaction process is not critical; however, during the reaction of these compounds it is especially preferred to maintain an excess of isocyanate groups in order to control the molecular weight of the prepolymer and prevent high viscosities.

The reaction temperature during prepolymer production is normally maintained below about 150°C, preferably between about 50°C and about 130°C. The reaction is continued until the content of unreacted isocyanate groups decreases to the theoretical amount or slightly below. The finished prepolymer should have a free isocyanate content of about 1 to about 8 percent, preferably about 1 to about 5 percent, and more preferably about 2 to about 4 percent by weight, based on the weight of prepolymer solids.

It is possible to conduct the prepolymer reaction in the presence of catalysts known to accelerate the reaction between isocyanate groups and isocyanate-reactive groups, such as an organo-tin compound or a tertiary amines; however, the use of a catalyst is generally not necessary, and it is often preferred to conduct the reaction without a catalyst.

In one embodiment, the dispersions of the current invention are made by mixing an isocyanate and glycol for several hours under nitrogen at a temperature in the range of about 80°C to about 100°C to form a prepolymer. The shear rate and force to which the dispersion mixture is subjected is important, and is described in Figure 1. If too much shear force is applied, the dispersion can become unstable and break apart. Generally, the preferred range of shear force is between 500 and 1700 Newtons during a mixing time that is generally between 2 and 5 minutes. In other embodiments a shear rate in the range of about 19000 to about 48000 sec⁻¹ may be used during a mixing time that is generally between 2 and 7 minutes.

At the end of the mixing time, the amount of excess isocyanate in the prepolymer can be determined by n-butylamine titration and back calculation. After the reaction product is cooled to room temperature, solvents [generally water miscible organic solvents such as acetone and methyl ethyl ketone (MEK)] can optionally be used to dilute the prepolymer to approximately a 75% weight percent solution.

This solution is then pumped into a chilled aqueous solution that contains a surfactant, which is a molecule composed of groups of opposing solubility tendencies, i.e. one or more groups have an affinity for the phase in which the molecule or ion is dissolved, and one or more groups are antipathic to that medium. Surfactants are classified according to the charge on the surface-active moiety. In anionic surfactants, this moiety carries a negative charge; in a cationic surfactant, the charge is positive; in a nonionic surfactant, there is no charge on the molecule and the solubilizing effect may be supplied, for example, by hydroxyl groups or a long chain of ethylene oxide groups; and in an amphoteric surfactant, the solubilizing effect is provided by both positive and negative charges in the molecule. Hydrophilic, solubilizing groups for anionic surfactants include carboxylates, sulfonates, sulfates (including sulfated alcohols and sulfated alkyl phenols), phosphates (including phosphate esters), N-acylsarcosinates, and acylated protein hydrolysates. Cationics are solubilized by amine and ammonium groups. In addition to polyoxyethylene, nonionic surfactants include a carboxylic acid ester, an anhydrosorbitol ester, a glycol ester of a fatty acid, an alkyl polyglycoside, a carboxylic amide, and a fatty acid glucamide. Any of the above described surfactants or equivalents are suitable, but a particularly suitable surfactant is sodium dodecylbenzenesulfonate. A surfactant may be used in an amount of about 0.1 to about 2 percent by weight, and preferably in an amount of about 0.5 to about 1 percent by weight.

The dispersion temperature is important for the small particle formation. The preferred dispersion temperature is about 0 to about 10°C. The solid content of the dispersion is about 10-60%, and typically 10-30%.

The final product is a stable, aqueous dispersion of poly(urea/urethane) particles having a solids content of up to about 60% by weight, preferably about 10-60% by weight, and most preferably about 30-45% by weight. However, it is always possible to dilute the dispersions to any minimum solids content desired. The solids content of the resulting dispersion may be determined by drying the sample in an oven at 100°C for 2 hours and comparing the weights before and after drying. The particle size is generally below about 1.0 micron, and preferably between about 0.01 to 0. 5 micron. The average particle size should be less than about 0.5 micron, and preferably between 0.01 to 0.3 micron. The small particle size enhances the stability of the dispersed particles

Fillers, plasticizers, pigments, carbon black, silica sols and the known levelling agents, wetting agents, antifoaming agents, stabilizers, and other known additives, may also be incorporated into the dispersions.

These dispersions find wide utility in fabric coating,

The dispersions may be applied to a porous substrate which subsequently remains bonded to the end product, such as woven or nonwoven textile structures and fiber mats, felts or nonwovens, also paper webs, foam sheeting or split leather which by virtue of their absorbing action cause the coating to harden immediately. This is followed by drying and, optionally, pressing at elevated temperatures However, drying may also be carried out on smooth, porous or nonporous materials, for example, metal, glass, paper, cardboard, ceramic materials, sheet steel, silicone rubber, aluminum foil, the end sheet structure subsequently being lifted off and used as such, or applied to a substrate using the reversal process by bonding, flame lamination or calendering. Application by the reversal process may be carried out at any time.

The poly(urea/urethane) dispersions of this invention have particular application as coatings in the production of personal protective equipment. Many articles are worn as personal protective equipment, including gloves, hats, aprons, gauntlets, shirts, pants and the like. Some of these articles are made of cut- and puncture-resistant materials, such as Kevlar® paraaramid polymer from DuPont, and may be of either nonwoven, woven or knit construction. An aramid is a polymer derived, for example, from m- or p-phenylenediamine and terephthaloyl or isophthaloyl chloride.

These constructions, generally known as textiles or fabrics, have holes or pores between the fibers, which make up the fabric regardless of the construction. Materials such as chemicals (solids, liquids or gases) can pass through the pores, thereby exposing the wearer to possible dangers. In addition, cold or hot air or vapors can pass through the pores, causing the wearer of the article discomfort. On the other hand, enhanced abrasion properties, gas permeation and moisture management will enhance performance of textile and industrial products.

Thin films can be formed between holes and pores by depositing a poly(urea/urethane) dispersion onto the fabric. The dispersion particles are thought to adhere to the surface of the fabric through hydrophobic interaction between fiber and the dispersion, and the capillary force stabilizes the composite structure. The dispersion deposited between the fiber is consolidated to form small domain films that seal the pores in the fabric.

The sealing density, which is the ratio between areas covered with polyurethane film and the open pore is defined by water permeability to the fabric in reference to the untreated fabric. The factors govern the sealing density are two fold. One is the properties of the fabric, such as the denier of the fiber, fabric construction, such as the type of knit or weave, threads per unit length in warp and fill, and weight of fabric. Another factor is the surface properties of fiber and fabric, such as surface roughness and types of finish applied to the fiber or fabric prior to the application of the dispersion. Knit fabrics generally have larger pores than woven fabrics and the sealing density for the knit fabric is generally lower if all conditions are equal. Yarns constituted with smaller staple with higher hairiness are expected to give a higher sealing density. On the other hand, fabrics made of filament yarns give lower sealing density compared to the fabrics made of yarns. Permeability of the dust particles, water, and gas would be inversely related to the sealing density. If the sealing density is complete, the fabric will be relatively impervious to those objects.

Moisture management is one of the key parameters for the level of comfort of use of the fabric. It is desirable to have water resistance, or waterproof fabric for certain applications, but moisture condensation on one side of fabric could cause discomfort. Therefore it is desirable to have a fabric treatment which will be resistance to water, but permeable to the moisture vapor.

Generally, a composite structure of porous membrane and hydrophobic coatings could provide materials suitable for such need as disclosed in JP 56-169,865. On the other hand, polyurethanes containing hydrophilic glycol have been proposed as membranes to control moisture. Typically a blend of polyethylene glycol (PEG) and polytetramethylene glycol (PTMEG) is employed to modulate the hydrophilicity of polyurethane. However, PEG and PTMEG are immiscible, and it is not trivial to make the desired polymer reproducibly. In addition PEG is known to have environmental effect on aquatic life.

It has been found that the poly(urea/urethane)s of this invention, particularly those prepared from a glycol copolymer of ethylene oxide and tetrahydrofuran, have a desirably high affinity toward water. This implies that the poly(urea/urethane)s of this invention, particularly those containing the copolymer glycols as a soft segment, have high water solubility. Since the permeability is a function of solubility and diffusion, the permeability of water vapor is predicted to be desirably high for a coating made with the poly(urea/urethane)s of this invention, and will be even higher for those poly(urea/urethane)s prepared from the copolymer glycols than for those prepared from other, homopolymeric polyether polyols.

The following examples illustrate but do not limit the invention. The particularly advantageous features of the invention may be seen in contrast to the comparative examples, which do not possess the distinguishing characteristics of the invention.

Unless otherwise specified, all chemicals and reagents were used as received from Aldrich Chemical Company, Milwaukee, WI. Various chemicals and reagents are referred to below by the following abbreviations:

| | |
|---|---|
| MDI | 4, 4'- diphenylmethane diisocyanate |
| Poly(EO-co-THF) | poly(ethylene oxide-co-tetrahydrofuran) |
| NCO | Isocyanate group |
| DMPA | 2, 2'- Bis(hydroxymethyl)propionic acid |
| MEK | Methylethyl ketone (2-butanone) |
| TEA | Triethylamine |
| SDBS | Sodium dodecylphenylsulfate |

### Materials set up

Poly(ethylene glycol-co-THF) may be obtained by the method disclosed in any of U.S. Patent Nos. 4,127,513, 4,139,567, 4,153,186,4,228,272 and 4,235,751; DE 86-3606479 and DE 83-3346136; J. M. Hammond, et al, J. Polym. Sci., Part A, Vol. 9, page 295 (971); and Hongzhi Zhang, et al, J. Appl. Polym. Sci., Vol. 73, p. 2303 (1999). PTMEG-1000 and PTMEG-1800 are trade designations for DuPont Terathane® polyether glycols. All glycols were dried at 90°C under vacuum for 12 hours before use. MDI was purified by heating to 50°C. DMPA, MEK, TEA and SDBS were purchased and were used without further purification. The mixers used to make the dispersions are an IKA^{®}mixer, model T25 BASIC Sl (IKA^{®} Works, Inc.), and a Ross mixer/emulsifier, model HSM-100LC (Charles Ross and Son Company). The IKA® mixer was operated at 11,000 rpm, and the Ross mixer was operated between 7,000 and 8,000 rpm.

### General procedure to prepare

### aqueous-polyurethane dispersion

Prepolymer was prepared by mixing MDI, glycol (and DMPA if necessary) at 90°C for 3-5 hours under nitrogen. The amount of excess NCO remaining after the coupling reaction was determined by titration. When a solvent was used to dilute the prepolymer, a solvent was added typically to make a 75% weight solution after the reaction product was cooled to room temperature. The prepolymer was placed into a tube and was slowly added into chilled aqueous solution containing surfactant, and occasionally base, via pneumatic air pump. Solids content of the dispersion is about 10-30%.

### General Procedure for Coating Gloves

### with Aqueous Polyureaurethane Dispersion

A woven glove is put onto a hand former and dipped into water for 5 seconds. The glove was then dipped into a polyurethane dispersion for 10-15 sec. The glove was then dried in an oven at 130°C for 12 min. After cooling down to room temperature, the glove was stripped from the former.

### Tests

### Abrasion resistance:

Abrasion resistance was measured according to ASTM D3884-92. The specimens were abraded using H18 abrasive wheels under a 500 gram load. The results are calculated as the % weight loss after 200 cycles. A low value indicates better wear resistance.

### Cut resistance:

The cut resistance was measured according to ASTM F1790-97. A small rectangular glove material specimen was placed on a metal mandrel of the cut test device. A special blade was moved across the specimen until cut-through is achieved. The device measures the distance of blade travel before cut-through as determined by when the blade makes contact with the metal mandrel. The distance of blade travel is determined with different weights on the device arm holding the blade. The results of these tests are then used to determine the weight required to cut through the glove material with 25 mm blade travel. Larger values reported by this test method indicate a material with greater cut resistance.

### Air permeability:

Air permeability was measured by passing a constant rate of air flow through a known area of fabric (38 cm²) into the atmosphere. The air resistance is measured using low sensitivity equipment (Textest FX 3300, Advanced Testing Instrument Corp., Greer, SC) and recorded as cubic feet/min².

### Moisture Vapor Transport:

The rate of moisture vapor diffusion through the fabric was determined according to the simple dish method similar to ASTM E96-80. A sample is placed on a water dish (82 mm in diameter and 19 mm depth) allowing a 9 mm air space between the water surface and specimen. The assembled specimen dishes are allowed to stabilize for two hours before taking the initial weight. The weight is recorded again after a 24 hour interval. The rate of moisture vapor loss is calculated in units of g/m²-24hours.

### Example 1

203 g (0.812 mole) of MDI was mixed with 796.2 g (0. 398 mole) Poly(EO-co-THF) (30% EO) glycol in a three-neck round bottom flask in dry box. The flask was then moved into hood and equipped with an overhead stirrer. The mixture was stirred under nitrogen at 90°C for 2.5 h. Titration of the mixture shows the NCO content is 4.28%.

30 g of capped glycol was weight and placed into a caulking tube. The glycol was then slowly added via caulking tube into 90 ml of 2% SDBS solution at 0°C. Final 22.5 % dispersion was made with IKA mixer and the dispersion was stable for several months.

### Example 2

123 g (0.492 mole) of MDI was mixed with 480 g (0.24 mole) of Poly(EO-co-THF) (50% EO) glycol in a three-neck round bottom flask in dry box. The flask was then moved into hood and equipped with an overhead stirrer. The mixture was stirred under nitrogen at 90°C for 3.5 h. Titration of the mixture shows the NCO content is 4.13 %.

40 g of capped glycol was weighed and placed into a caulking tube. The glycol was then slowly added via caulking tube into 40 ml of 2% SDBS solution at 0°C. Final 60 % dispersion was made with IKA mixer and the dispersion was stable for several weeks.

### Example 3

Gloves made of 100% KEVLAR® brand fiber, a cut resistant material (available from DuPont Co., Wilmington, DE), in a seamless knit shell were used and identified as Control. The seamless knit gloves were mounted on a hand form and fully dipped into an aqueous polyureaurethane dispersion. The thickness of the coating was determined by the immersion time, the concentration of the dispersion and the drying conditions. These gloves were labeled Coated. Gloves coated with the polyureaurethane dispersion were laundered using warm water wash and dried for 35 minutes at 140 °F. These gloves were described as Laundered. The performance of the coated gloves was compared with the Control gloves and the Laundered gloves. The results are shown in Table 1 below.

The improved wear resistance was observed by the 5-fold increase in the abrasion resistant properties of the coated and the control gloves. Even after laundering, the coated gloves showed improved wear resistance. The control glove had a cut protection performance value of 673 grams. The cut resistant performance was not compromised in the coated gloves. The coating had fully penetrated all yarns in the seamless knit shell; however, cut resistance was maintained. The coated gloves showed a unique combination of breathability and moisture management, along with retention of cut protection performance.

**Table 1**

| Sample Description | Basis weight | Abrasion resistance | Cut resistance | Air permeability | Moisture vapor transport |
|---|---|---|---|---|---|
| | oz/yd² | % weight loss | grams | cfm | gms/24hrs/ m² |
| *Control* | 7.55 | 9.0 | 675 | 441 | 1468 |
| *Coated* | 8.21 | 1.7 | 700 | 427 | 1882 |
| *Laundered* | 8.46 | 1.8 | 638 | 363 | 1625 |

## Claims

1. An article of manufacture that is coated with a urea/urethane polymer comprising (a) repeating units derived from a hydroxy-terminated copolymer prepared from tetrahydrofuran and one or both of an alkylene oxide and a cyclic acetal, and (b) repeating units derived from a polyisocyanate selected from the group consisting of toluene diisocyanate, methylene diphenyldiisocyanate and polymethylene polyphenylisocyanate
wherein the urea/urethane polymer contains less than 2 mole percent of urea units described by the formula -R - N(R²) - C(O) - N(R²)-R¹- ;
wherein R is an aromatic hydrocarbon radical, R¹ is an aliphatic hydrocarbon radical, and R¹ is H or an amide group that is described by the formula - C(O) - N(R²) - R -; and
wherein the tetrahydrofuran is described by the formula 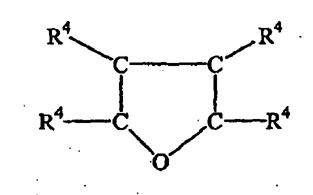 In which any one of the R⁴ s may be a C₁ to C₄ alkyl radical- with the remaining R⁴ s being hydrogen, wherein the article is a fabric or textile and wherein the fabric or textile comprises a paraaramid polymer.

2. An article according to Claim 1 wherein the alkylene oxide is selected from the group consisting of 1,2-propylene oxide and ethylene oxide.

3. An article according to Claim 1 wherein the alkylene oxide is ethylene oxide.

4. An article according to Claim 1 wherein each R⁴ in the tetrahydrofuran is hydrogen.

5. An article according to Claim 1 wherein each R⁴ in the tetrahydrofuran is hydrogen, the hydroxy-terminated copolymer is prepared from an alkylene oxide, and the alkylene oxide is ethylene oxide.

6. An article according to Claim 1 wherein the urea/urethane polymer contains less than about 1 mole percent of the described urea units.

7. An article according to Claim 1 wherein the urethane polymer further comprises repeating units derived from an ionic compound or a potentially ionic compound.

8. An article according to Claim 1 wherein the coating is prepared from an aqueous dispersion of the urea/urethane polymer of Claim 1 and a surfactant.

9. An article according to Claims 1 wherein the article is a glove.

## Patentansprüche

1. Herstellungsartikel, der mit einem Hamstoff-/Urethanpolymer beschichtet ist, das (a) Wiederholungseinheiten, die von einem hydroxyterminierten Copolymer abgeleitet sind, das aus Tetrahydrofuran und einem oder beiden von Alkylenoxid und einem cyclischen Acetal hergestellt ist, und (b) Wiederholungseinheiten umfasst, die von einem Polyisocyanat abgeleitet sind, das aus der Gruppe ausgewählt ist bestehend aus Toluoldiisocyanat, Methylendiphenyldiisocyanat und Polymethylenpolyphenylisocyanat,
wobei das Harnstoff /Urethanpolymer weniger als 2 Molprozent Harnstoffeinheiten enthält, die durch die Formel -R-N(R²)-C(O)-N(R ²)-R¹-beschrieben sind;
wobei R ein aromatisches Kohlenwasserstoffradikal ist, R¹ ein aliphatisches Kohlenwasserstoffradikal ist und R² H oder eine Amidgruppe ist, die durch die Formel C(O)-N(R²)-R- beschrieben ist; und
wobei das Tetrahydrofuran durch die Formel 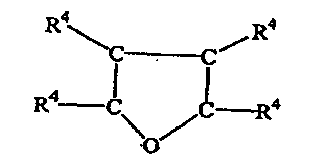 beschrieben ist, wobei irgendeines von R⁴ ein C₁- bis C₄-Alkylradikal sein kann, wobei die übrigen R⁴ Wasserstoff sind, wobei der Artikel ein Stoff oder Textil ist, und wobei der Stoff oder das Textil ein Para-Aramidpolymer umfasst.

2. Artikel nach Anspruch 1, wobei das Alkylenoxid aus der Gruppe ausgewählt ist bestehend aus 1,2-Propylenoxid und Ethylenoxid.

3. Artikel nach Anspruch 1, wobei das Alkylenoxid Ethylenoxid ist.

4. Artikel nach Anspruch 1, wobei jedes R⁴ in dem Tetrahydrofuran Wasserstoff ist.

5. Artikel nach Anspruch 1, wobei jedes R⁴ in dem Tetrahydrofuran Wasserstoff ist, das hydroxyterminierte Copolymer aus einem Alkylenoxid hergestellt ist und das Alkylenoxid Ethylenoxid ist.

6. Artikel nach Anspruch 1, wobei das Harnstoff-/Urethanpolymer weniger als etwa 1 Molprozent der beschriebenen Harnstoffeinheiten enthält.

7. Artikel nach Anspruch 1, wobei das Urethanpolymer des Weiteren Wiederholungseinheiten umfasst, die von einer ionischen Verbindung oder einer potentiell ionischen Verbindung abgeleitet sind.

8. Artikel nach Anspruch 1, wobei die Beschichtung aus einer wässrigen Dispersion des Harnstoff-/Urethanpolymers nach Anspruch 1 und einem Tensid hergestellt ist.

9. Artikel nach Anspruch 1, wobei der Artikel ein Handschuh ist.

## Revendications

1. Article manufacturé qui est revêtu avec un polymère d'urée/uréthane comprenant (a) des unités de répétition dérivées d'un copolymère à terminaison hydroxy préparé à partir de tétrahydrofurane et d'un parmi un oxyde d'alkylène et un acétal cyclique ou les deux, et (b) des unités de répétition dérivées d'un polyisocyanate choisi dans le groupe constitué de toluène diisocyanate, de méthylène diphényldiisocyanate et de polyméthylène polyphénylisocyanate;
dans lequel le polymère d'urée/uréthane contient moins de 2 pour-cent en moles d'unités d'urée décrites par la formule -R-N(R²)-C(O)-N(R²)-R¹-;
dans lequel R est un radical hydrocarbure aromatique, R¹ est un radical hydrocarbure aliphatique et R² est H ou un groupe amide qui est décrit par la formule - C(O)-N(R²)-R-; et
dans lequel le tétrahydrofurane est décrit par la formule: 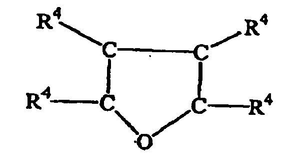 dans laquelle n'importe lequel des R⁴ peut être un radical alkyle C₁ à C₄, les R⁴ restants étant des hydrogènes, dans lequel l'article est un tissu ou un textile et dans lequel le tissu ou le textile comprend un polymère de para-aramide.

2. Article selon la revendication 1, dans lequel l'oxyde d'alkylène est choisi dans le groupe constitué d'oxyde de 1,2-propylène et d'oxyde d'éthylène.

3. Article selon la revendication 1, dans lequel l'oxyde d'alkylène est l'oxyde d'éthylène.

4. Article selon la revendication 1, dans lequel chaque R⁴ dans le tétrahydrofurane est un hydrogène.

5. Article selon la revendication 1, dans lequel chaque R⁴ dans le tétrahydrofurane est un hydrogène, le copolymère à terminaison hydroxy est préparé à partir d'un oxyde d'alkylène et l'oxyde d'alkylène est l'oxyde d'éthylène.

6. Article selon la revendication 1, dans lequel le polymère d'urée/uréthane contient moins d'environ 1 pour-cent en moles des unités d'urée décrites.

7. Article selon la revendication 1, dans lequel le polymère d'uréthane comprend en outre des unités de répétition dérivées d'un composé ionique ou d'un composé potentiellement ionique.

8. Article selon la revendication 1, dans lequel le revêtement est préparé à partir d'une dispersion aqueuse du polymère d'urée/uréthane selon la revendication 1 et d'un tensioactif.

9. Article selon la revendication 1, où l'article est un gant.
